# EUROPEAN PATENT SPECIFICATION

(11) **EP 4 001 718 B1**
(45) Date of publication and mention of the grant of the patent: **21.01.2026**
(21) Application number: 20840376.6
(22) Date of filing: 10.06.2020
(51) Int. Cl.: F16K 27/10, B29C 65/08, B29C 65/14, B29C 65/78, B29K 101/12

(54) **FLOW PATH SWITCHING VALVE**
STRÖMUNGSWEGUMSCHALTVENTIL
SOUPAPE DE COMMUTATION DE TRAJET D'ÉCOULEMENT

(30) Priority: 18.07.2019 JP 2019132951
(43) Date of publication of application: 25.05.2022
(73) Proprietor: Fujikoki Corporation, Tokyo 158-0082 (JP)
(72) Inventor: KONDO Daisuke, Tokyo 158-0082 (JP); MOCHIZUKI Kenichi, Tokyo 158-0082 (JP); HARADA Takao, Tokyo 158-0082 (JP); MATSUMOTO Takayuki, Tokyo 158-0082 (JP); SHIRAKAWA Naomasa, Tokyo 158-0082 (JP); TAKAHASHI Kouji, Kariya- city, Aichi 4488661 (JP)
(74) Representative: Ter Meer Steinmeister & Partner
(86) International application number: PCT/JP2020/022806
(87) International publication number: WO 2021/010059

(56) References cited:
- EP-A2- 1 936 141
- JP-A- 2001 199 228
- JP-A- 2005 030 540
- JP-A- 2016 041 963
- JP-A- 2016 041 963
- JP-A- 2018 084 288
- JP-A- 2018 084 288
- JP-U- S 511 821
- US-A- 4 175 590

## Description

### Technical Field

The present invention relates to a flow path switching valve, and particularly to a flow path switching valve in which a valve main body and a case are joined to each other by welding.

### Background Art

Patent Literature 1 discloses an example of a flow path switching valve of the related art. The flow path switching valve includes a valve case, a gear case disposed on an upper portion of the valve case, and a ball-shaped valve member disposed in a valve chamber of the valve case. Patent Literature 2 discloses a valve including a valve case and a valve cap fastened two each other with fusion bonding.

### Citation List

### Patent Literature

Patent Literature 1: Japanese Unexamined Patent Application Publication No. 2010-223418
Patent Literature 2: United States Patent Publication No. 4 175 590 A

### Summary of Invention

### Technical Problem

As an example of such a flow path switching valve, there is a flow path switching valve in which a valve case and a gear case are joined to each other by welding. When the valve case and the gear case are welded together, burrs may sometimes be generated on the inside and the outside of a joint portion between the valve case and the gear case as a result of the welding. In addition, there is a possibility that burrs generated on the inside of the joint portion may enter the valve case or that burrs generated on the outside of the joint portion may protrude from the valve case and the gear case and spoil the appearance of the flow path switching valve.

Accordingly, it is an object of the present invention to provide a flow path switching valve capable of effectively suppressing the influence of burrs that are generated by welding.

### Solution to Problem

To achieve the above-described object, a flow path switching valve according to an aspect of the present invention is defined in claim 1.

In the present invention, it is preferable that the second burr containment space communicate with the outside through a gap formed between the surrounding wall portion and the case.

In the present invention, it is preferable that the joint portion be a portion formed by joining the inner peripheral surface of the surrounding wall portion and the outer peripheral surface of the cylindrical portion over the entire periphery.

In the present invention, it is preferable that the first burr containment space be positioned close to the end of the cylindrical portion, and it is preferable that the second burr containment space be positioned close to an end of the surrounding wall portion.

In the present invention, it is preferable that the second burr containment space have a first end portion that is closer to the joint portion and a second end portion, which is opposite to the first end portion, and it is preferable that the second end portion be formed of an annular groove formed in the case.

In the present invention, it is preferable that the second burr containment space be formed in such a manner that the second end portion extends outward further than the first end portion does.

### Advantageous Effects of Invention

According to the present invention, an annular joint portion, an annular first burr containment space, and an annular second burr containment space are formed between a valve main body and a case, and the joint portion is interposed between the first burr containment space and the second burr containment space. Accordingly, burrs that are generated when the valve main body and the case are joined to each other by welding are contained in the two annular burr containment spaces, which are formed in such a manner that the joint portion is interposed therebetween. As a result, the burrs can be suppressed from entering the inside of the valve main body or protruding outward from the valve main body. Therefore, the influence of the burrs, which are generated by welding, can be effectively reduced.

### Brief Description of Drawings

[Fig. 1] Fig. 1 is a front view of a flow path switching valve according to a first embodiment of the present invention.
[Fig. 2] Fig. 2 is a perspective view including a cross section of the flow path switching valve illustrated in Fig. 1.
[Fig. 3] Fig. 3 is a cross-sectional view taken along line A-A of Fig. 2.
[Fig. 4] Fig. 4 is a vertical cross-sectional view of the flow path switching valve illustrated in Fig. 1.
[Fig. 5] Fig. 5 is an enlarged cross-sectional view of the vertical cross-sectional view illustrated in Fig. 4.
[Fig. 6] Fig. 6 is a vertical cross-sectional view of a flow path switching valve according to a second embodiment of the present invention.
[Fig. 7] Fig. 7 is an enlarged cross-sectional view of the vertical cross-sectional view illustrated in Fig. 6. Description of Embodiments

### (First Embodiment)

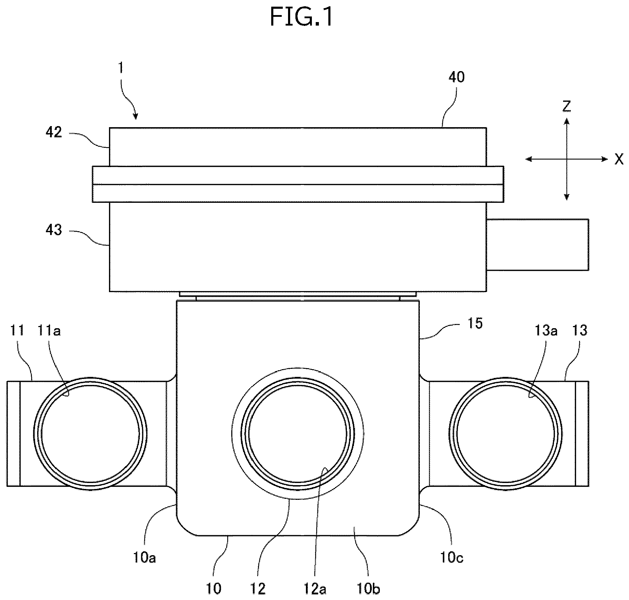

A flow path switching valve according to a first embodiment of the present invention will be described below with reference to Fig. 1 to Fig. 5.

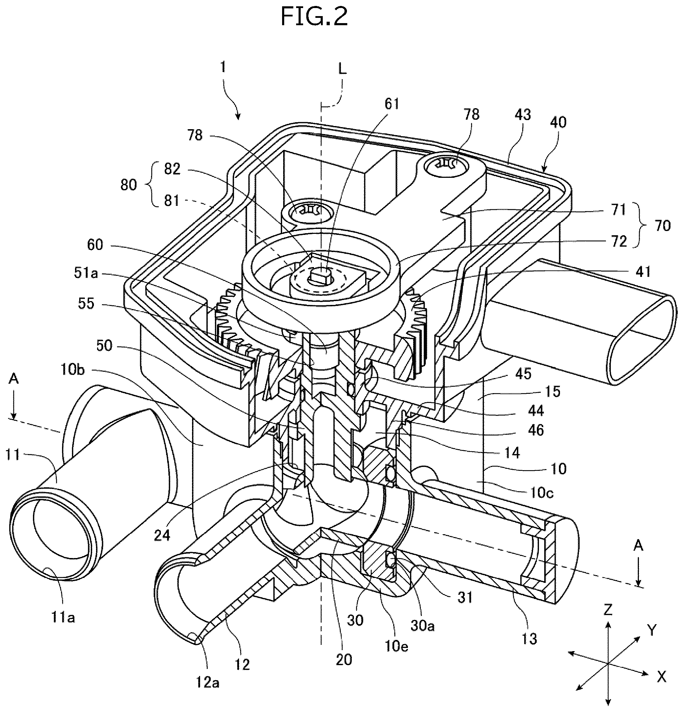

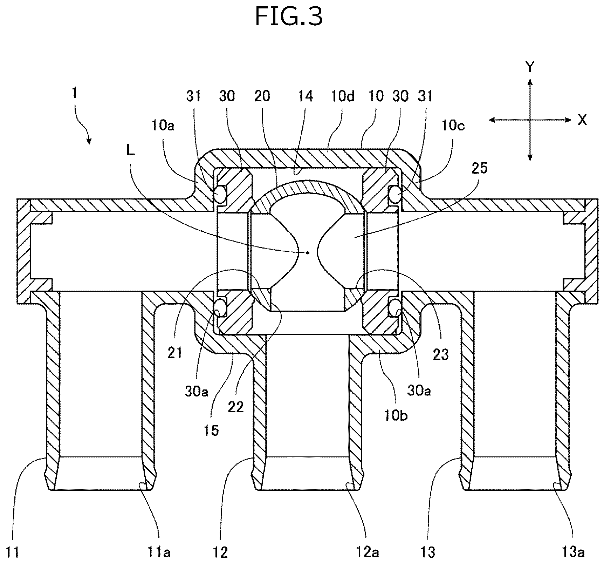

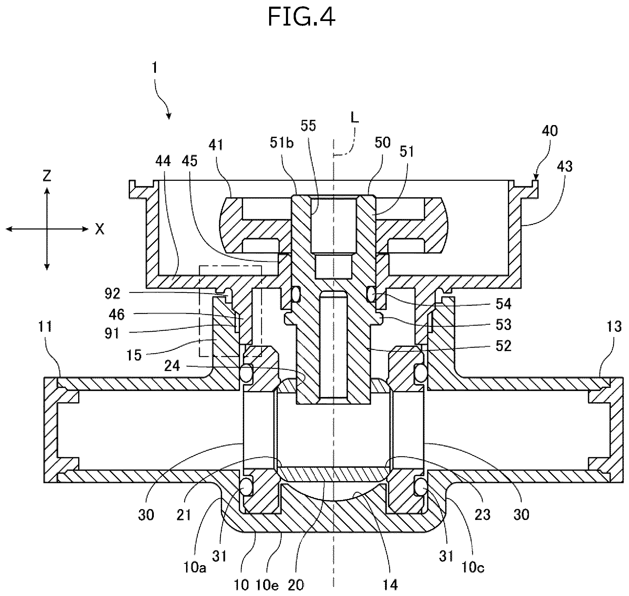

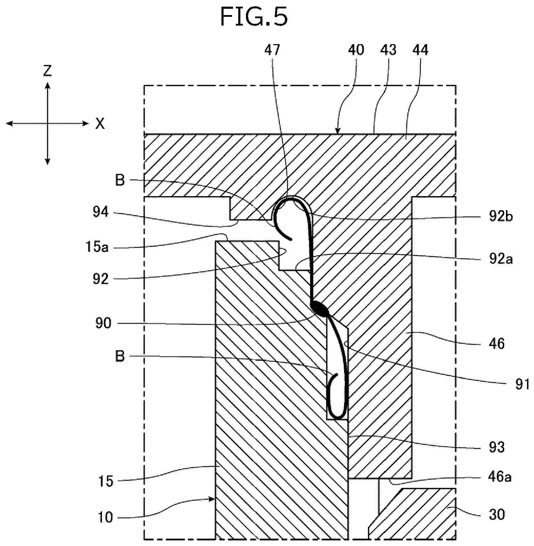

Fig. 1 is a front view of the flow path switching valve according to the first embodiment of the present invention. Fig. 2 is a perspective view including a cross section of the flow path switching valve illustrated in Fig. 1. Fig. 3 is a cross-sectional view taken along line A-A of Fig. 2. Fig. 4 is a vertical cross-sectional view of the flow path switching valve illustrated in Fig. 1 (a cross-sectional view taken along an axis L in Fig. 2). Fig. 5 is an enlarged cross-sectional view that is surrounded by a chain line frame in the vertical cross-sectional view illustrated in Fig. 4.

In the following description, the terms "upper", "lower", "left", and "right" are used to indicate relative positional relationships between components in the drawings and do not indicate the absolute positional relationships between the components. In the drawings, the X-axis direction corresponds to the transverse direction. The Y-axis direction corresponds to a proximal-distal direction (a front-rear direction). The Z-axis direction corresponds to the vertical direction. The X-axis, Y-axis, and Z-axis are perpendicular to one another. This is common to a second embodiment described later.

As illustrated in Fig. 1 to Fig. 4, a flow path switching valve 1 of the present embodiment includes a valve main body 10, a ball valve member 20 that serves as a valve member, sheet members 30, 30, sealing members 31, 31, a driving section 40, and a valve shaft 50. The flow path switching valve 1 further includes a potentiometer shaft 60 serving as a rotation-angle output shaft, a potentiometer base 70 serving as a base body, and a potentiometer 80 serving as a rotation-angle detection unit. Note that Fig. 2 illustrates the flow path switching valve 1 to which an upper case 42 has not yet been attached. Fig. 4 illustrates the flow path switching valve 1 to which the upper case 42, the potentiometer shaft 60, the potentiometer base 70, and the potentiometer 80 have not yet been attached.

The valve main body 10 is made of, for example, synthetic resin such as polyphenylene sulfide (PPS) and is formed in the shape of a substantially cubic box having an open upper end. The valve main body 10 includes a surrounding wall portion 15 that is formed in a substantially quadrangular cylindrical shape and that has a left-side wall portion 10a, a front wall portion 10b, a right-side wall portion 10c, and a rear wall portion 10d, and a bottom wall portion 10e that is integrally provided at the lower end of the surrounding wall portion 15.

A first tubular portion 11 that forms a first flow path, which is substantially L-shaped, is provided on the left-side wall portion 10a of the valve main body 10. A second tubular portion 12 that forms a second flow path, which has a linear shape, is provided on the front wall portion 10b of the valve main body 10. A third tubular portion 13 that forms a third flow path, which is substantially L-shaped and which is plane-symmetrical to the first tubular portion 11, is provided on the right-side wall portion 10c of the valve main body 10. An opening 11a of the first tubular portion 11, an opening 12a of the second tubular portion 12, and an opening 13a of the third tubular portion 13 face toward the front side (the proximal side as viewed in Fig. 1, the lower side as viewed in Fig. 3). The first tubular portion 11, the second tubular portion 12, and the third tubular portion 13 are in communicate with a valve chamber 14 formed in the valve main body 10. The valve main body 10 may have two or four or more flow paths as flow paths that are in communication with the valve chamber 14.

The ball valve member 20 is made of, for example, metal or synthetic resin and is formed in a hollow ball shape (spherical shape). The ball valve member 20 is rotatably supported by the sheet members 30, 30 and disposed in the valve chamber 14. At a rotation position illustrated in Fig. 3, the ball valve member 20 has a first opening 21 that is open toward the left side, a second opening 22 that is open toward the front side, and a third opening 23 that is open toward the right side. A switching flow path 25, which is substantially T-shaped when viewed in plan view, is formed in the ball valve member 20 so as to connect the first opening 21, the second opening 22, and the third opening 23 to one another. Note that, for example, the ball valve member 20 may only have the first opening 21 and the second opening 22, and the switching flow path 25, which is substantially L-shaped when viewed in plan view, may be formed so as to connect the first opening 21 and the second opening 22 to each other at the rotation position illustrated in Fig. **3****.** In addition, in the present embodiment, although the flow path switching valve 1 includes the ball valve member 20 as a valve member, the flow path switching valve 1 may include valve member having a columnar shape.

The switching flow path 25 is configured to switch the connection between the first tubular portion 11 (first flow path), the second tubular portion 12 (second flow path), and the third tubular portion 13 (third flow path) in accordance with rotation positions of the ball valve member 20. Specifically, when the ball valve member 20 is located at the rotation position illustrated in Fig. 3, the switching flow path 25 connects the first tubular portion 11, the second tubular portion 12, and the third tubular portion 13 to one another. When the ball valve member 20 is located a rotation position when viewed in plan view by being rotated by 90 degrees in a clockwise direction from the rotation position illustrated in Fig. 3, the switching flow path 25 connects the first tubular portion 11 and the second tubular portion 12 to each other. When the ball valve member 20 is located a rotation position when viewed in plan view by being rotated by 90 degrees in a counterclockwise direction from the rotation position illustrated in Fig. 3, the switching flow path 25 connects the second tubular portion 12 and the third tubular portion 13 to each other.

An upper portion of the ball valve member 20 has a valve-shaft insertion hole 24 into which the valve shaft 50 is inserted. The valve-shaft insertion hole 24 is formed in such a manner that the ball valve member 20 rotates about the axis L, which is a rotation axis, along with rotation of the valve shaft 50. Specifically, the valve-shaft insertion hole 24 is formed in a shape that is the same as the cross-sectional shape of a prism portion 52 of the valve shaft 50 in a direction perpendicular to the axial direction (the transverse cross-sectional shape of the prism portion 52). In the present embodiment, the valve-shaft insertion hole 24 is formed in a regular hexagonal shape.

The sheet members 30, 30 are made of, for example, synthetic resin such as polytetrafluoroethylene (PTFE) and are each formed in a ring-like shape. The sheet members 30, 30 are paired with each other. The sheet members 30, 30 are disposed in the valve chamber 14. The sheet members 30, 30 are arranged so as to face each other and so as to be spaced apart from each other in the X-axis direction. The sheet members 30, 30 support the ball valve member 20 in the valve chamber 14 in such a manner that the ball valve member 20 is rotatable between the sheet members 30, 30.

The sealing members 31, 31 are, for example, O-rings made of an elastic material such as a rubber material. One of the sealing members 31 is interposed between one of the sheet members 30 and the left-side wall portion 10a of the valve main body 10 so as to be in a compressed state. The other of the sealing members 31 is interposed between the other of the sheet members 30 and the right-side wall portion 10c of the valve main body 10 so as to be in a compressed state. In the present embodiment, the sealing member 31 is fitted in an annular groove 30a formed in the sheet member 30. The sealing member 31 partially projects from the annular groove 30a. The sealing members 31, 31 seal the space between the valve main body 10 and the ball valve member 20 together with the sheet members 30, 30. Note that, in the flow path switching valve 1, the sealing members 31, 31 may be omitted, and the seat members 30, 30 made of an elastic material such as a rubber material and also having a function of a sealing member may be employed.

The driving section 40 includes a driving mechanism, a lower case 43, and an upper case 42. The driving mechanism includes a combination of a motor (not illustrated) and a speed reducer that includes a gear 41. The lower case 43 and the upper case 42 compose a case in which all or partly of the driving mechanism is accommodated. In the present embodiment, the speed reducer including the gear 41 and other members (the other members other than the gear 41 are not illustrated in the drawings) is accommodated in the lower case 43 and the upper case 42. The lower case 43 and the upper case 42 are made of, for example, synthetic resin such as polyphenylene sulfide (PPS). The upper case 42 is attached to the lower case 43 by a mounting structure such as a screw structure or a snap-fit structure. The drive section 40 rotates the ball valve member 20 about the axis L via the valve shaft 50.

The lower case 43 includes a cylindrical bearing portion 45 that is integrally formed at the center of a bottom wall portion 44. The valve shaft 50 is inserted into the bearing portion 45. The valve shaft 50 is rotatably supported by the bearing portion 45. The lower case 43 includes a cylindrical portion 46 that is formed in a substantially quadrangular cylindrical shape and that projects downward from the bottom wall portion 44. The cylindrical portion 46 is inserted into the surrounding wall portion 15 of the valve main body 10 from the upper end side along the axis L direction (Z-axis direction). The cylindrical portion 46 is disposed inside the surrounding wall portion 15. An end 46a of the cylindrical portion 46 is fitted to the inside of the surrounding wall portion 15. As a result of the end 46a of the cylindrical portion 46 being fitted to the inside of the surrounding wall portion 15, the surrounding wall portion 15 and the cylindrical portion 46 are positioned with respect to each other. In addition, in the valve main body 10, the end 46a of the cylindrical portion 46 is disposed so as to be slightly spaced apart from the sheet members 30, 30 in the axis L direction. As a result, the cylindrical portion 46 also functions as a stopper that restrains the sheet members 30, 30 from being displaced in the axis L direction. The cylindrical portion 46 is combined with the surrounding wall portion 15 of the valve main body 10. The cylindrical portion 46 and the surrounding wall portion 15 are joined to each other by ultrasonic welding. Since the lower case 43 is joined to the valve main body 10 by ultrasonic welding, it is preferable that the lower case 43 be made of the same synthetic resin as that of the valve main body 10.

As illustrated in Fig. 5, the flow path switching valve 1 includes an annular joint portion 90 between the valve main body 10 and the lower case 43. The joint portion 90 is a portion formed by joining the inner peripheral surface of the surrounding wall portion 15 and the outer peripheral surface of the cylindrical portion 46 over the entire periphery. In addition, the flow path switching valve 1 has two annular burr containment spaces (a first burr containment space 91, a second burr containment space 92) each of which extends in the peripheral direction of the surrounding wall portion 15 between the valve main body 10 and the lower case 43. The first burr containment space 91 and the second burr containment space 92 are formed in such a manner that the joint portion 90 is interposed therebetween.

The first burr containment space 91 is positioned between the surrounding wall portion 15 and the cylindrical portion 46 and is positioned closer to the end 46a of the cylindrical portion 46 than the joint portion 90 is. The first burr containment space 91 is an enclosed space. In the present specification, the term "enclosed space" refers to a space that is not connected to a gap through which a burr B, which is generated when the valve main body 10 and the lower case 43 are welded together, can extend. In other words, the term "enclosed space" refers to an enclosed space for the burr B. By providing the first burr containment space 91 in this manner, when the burr B generated from the joint portion 90 extends in the first burr containment space 91, the burr B can be contained in the first burr containment space 91 because there is no gap through which the burr B can extend.

In the present embodiment, the first burr containment space 91 communicates with a gap 93 formed between the inner peripheral surface of the surrounding wall portion 15 and the outer peripheral surface of the cylindrical portion 46, and the size of this gap 93 is 30 µm to 100 µm. The thickness of the burr B is more than 100 µm, and thus, the burr B can be prevented from extending through the gap 93 and entering the valve chamber 14. The first burr containment space 91 can keep the burr B inside it with certainty. In order to avoid forming a joint portion other than the joint portion 90 between the surrounding wall portion 15 and the cylindrical portion 46 by ultrasonic welding, the size of the gap 93 is set to be 30 µm or more.

The second burr containment space 92 is positioned closer to an end 15a of the surrounding wall portion 15 than the joint portion 90 is. The second burr containment space 92 communicates with the outside of the surrounding wall portion 15 through a gap 94 formed between the end 15a of the surrounding wall portion 15 and the lower case 43. By measuring a dimension of the gap 94 in the Z-axis direction, the distance between the valve main body 10 and the lower case 43 that has been changed through the joining process can be determined, and thus, the joined condition of the valve main body 10 and the lower case 43 can be checked.

The second burr containment space 92 has a first end portion 92a (a lower end portion in Fig. 5) that is closer to the joint portion 90 and a second end portion 92b (an upper end portion in Fig. 5), which is opposite to the first end portion 92a. The second end portion 92b is formed of an annular groove 47 that is formed in the lower case 43. By providing the second end portion 92b in this manner, when another burr B generated from the joint portion 90 extends in the second burr containment space 92 from the first end portion 92a toward the second end portion 92b, the burr B extends along the inner surface of the second end portion 92b, which is formed of the groove 47, and the tip of the burr B makes a turn toward the first end portion 92a. As a result, the burr B extends in a vortical manner in the second burr containment space 92. The second burr containment space 92 can keep the burr B inside it. Although the groove 47 is U-shaped when viewed in cross section in the present embodiment, the groove 47 may be, for example, V-shaped when viewed in cross section, and it is preferable that the groove 47 have a shape that causes the tip of the burr B to make a turn toward the first end portion 92a.

In addition, the second burr containment space 92 is formed in such a manner that the second end portion 92b extends outward (toward the left side in Fig. 5 and in a direction in which the outer peripheral surface of the cylindrical portion 46 is oriented) further than the first end portion 92a does. This suppresses the tip of the burr B from directly entering the gap 94. The second burr containment space 92 can prevent the burr B from extending through the gap 94 and protruding to the outside.

The valve shaft 50 is made of synthetic resin, and the overall shape of the valve shaft 50 is a columnar shape that extends linearly. The valve shaft 50 includes a round columnar portion 51 and the prism portion 52 that is coaxially connected to the lower end of the round columnar portion 51. The valve shaft 50 is disposed in such a manner as to extend along the axis L.

The lower end portion of the round columnar portion 51 has an annular stopper portion 53 that projects outward in a radial direction. The stopper portion 53 is formed in such a manner that the outer diameter thereof is larger than the inner diameter of the bearing portion 45.

The round columnar portion 51 has a groove formed in the lower end portion over the entire periphery at a position above the stopper portion 53. An annular O-ring 54 made of a rubber material or the like is fitted to the groove. The round columnar portion 51 is inserted into the bearing portion 45 and is rotatably supported by the bearing portion 45. The outer diameter of the round columnar portion 51 is slightly smaller than the inner diameter of the bearing portion 45. The round columnar portion 51 is inserted into the bearing portion 45, and the O-ring 54 seals the gap between the valve shaft 50 and the bearing portion 45. This prevents a fluid in the valve chamber 14 from leaking to the outside of the valve chamber 14.

The gear 41 of the driving mechanism of the driving section 40 is press-fitted onto an upper end portion of the round columnar portion 51. In addition, the upper end portion of the round columnar portion 51 has a flat-surface portion 51a for preventing the gear 41 from slipping. The gear 41 may be attached to the valve shaft 50 by a method other than press-fitting.

The prism portion 52 is formed in a columnar shape having a regular hexagonal transverse cross-sectional shape. The prism portion 52 is inserted into the valve-shaft insertion hole 24 of the ball valve member 20. The prism portion 52 is attached to the ball valve member 20 along the axis L. The axis L of the ball valve member 20 serves as a rotation axis of the valve shaft 50. The valve shaft 50 is rotated about the axis L along with rotation of the gear 41. The valve-shaft insertion hole 24 is formed in a regular hexagonal shape, which is the same as the transverse cross-sectional shape of the prism portion 52, and thus, the valve-shaft insertion hole 24 and the prism portion 52 are fitted to each other. The ball valve member 20 is rotated about the axis L along with rotation of the valve shaft 50. The prism portion 52 is formed in such a manner that the outer diameter thereof is smaller than the outer diameter of the stopper portion 53.

The prism portion 52 may have a polygonal columnar shape such as a triangular columnar shape or a quadrangular columnar shape, or a columnar shape having a D-shaped section in which part of the side surface of a round column is formed as a plane, other than the regular hexagonal shape. In these cases, the valve-shaft insertion hole 24 is also formed in a shape the same as the transverse cross-sectional shape of the prism portion 52.

In addition, an attachment hole 55 is formed at the center of an end surface 51b of the round columnar portion 51, the end surface 51b facing upward. The attachment hole 55 has an inner space that has a substantially round columnar shape along the axis L. The potentiometer shaft 60 is press-fitted into the attachment hole 55.

For example, the potentiometer shaft 60 is made of metal such as stainless steel or brass or is made of synthetic resin such as polyphenylene sulfide (PPS). The potentiometer shaft 60 is a separate component from the valve shaft 50. The potentiometer shaft 60 is press-fitted into the attachment hole 55 of the valve shaft 50. The potentiometer shaft 60 is coaxially fixed to the valve shaft 50. The potentiometer shaft 60 includes a D-cut shaped fitting shaft portion 61 formed on an upper end portion thereof. The fitting shaft portion 61 and a rotor 81 of the potentiometer 80 are fitted to each other.

The potentiometer base 70 is made of synthetic resin and includes a base main body portion 71 and a meter attachment portion 72 that are integrally formed. The base main body portion 71 is formed in a substantially flat plate-like shape and is fixed with screws 78, 78 to bosses (not illustrated) protruding upward from the bottom wall portion 44 of the lower case 43. The meter attachment portion 72 is formed in a substantially circular plate-like shape, and the potentiometer 80 is attached to the center of the meter attachment portion 72.

The potentiometer 80 is a rotation angle sensor for detecting a rotation angle. The potentiometer 80 includes the rotor 81 having a circular plate-like shape and a meter body portion 82. The meter body portion 82 rotatably supports the rotor 81. The meter body portion 82 is a signal output unit that outputs a signal that corresponds to the rotation angle of the rotor 81. A fitting hole having a D-like shape in plan view is provided at the center of the rotor 81. The fitting shaft portion 61 of the potentiometer shaft 60 is fitted into the fitting hole. The rotor 81 is rotated along with rotation of the fitting shaft portion 61. As a result, the potentiometer 80 detects the rotation angle of the potentiometer shaft 60 about the axis L.

In the flow path switching valve 1, rotation of the motor of the driving section 40 is output to the valve shaft 50 via the gear 41, and the valve shaft 50 is rotated about the axis L. Along with this rotation of the valve shaft 50, the ball valve member 20 is rotated about the axis L so as to be located at each of the rotation positions. As a result, connections of flow paths according to the rotation positions are achieved. In addition, the potentiometer shaft 60 is rotated about the axis L together with the valve shaft 50, and a signal corresponding to the rotation angle of the potentiometer shaft 60 is output by the potentiometer 80. On the basis of the signal output by the potentiometer 80, it is possible to monitor which rotation position the ball valve member 20 is in.

In the manner described above, in the flow path switching valve 1 of the present embodiment, the annular joint portion 90, which is formed by joining the inner peripheral surface of the surrounding wall portion 15 of the valve main body 10 and the outer peripheral surface of the cylindrical portion 46 of the lower case 43 together over the entire periphery, is provided between the valve main body 10 and the lower case 43. In addition, in the flow path switching valve 1, the annular first burr containment space 91 and the annular second burr containment space 92 are formed between the valve main body 10 and the lower case 43 in such a manner that the joint portion 90 is interposed between these burr containment spaces. With this configuration, the burrs B generated when the inner peripheral surface of the surrounding wall portion 15 and the outer peripheral surface of the cylindrical portion 46 are joined to each other by ultrasonic welding are contained in the first burr containment space 91 and the second burr containment space 92, which are formed in such a manner that the joint portion 90 is interposed therebetween. As a result, the burrs B can be suppressed from entering the inside of the valve main body 10 or protruding outward from the valve main body 10. Therefore, the influence of the burrs B, which are generated by welding, can be effectively reduced.

### (Second Embodiment)

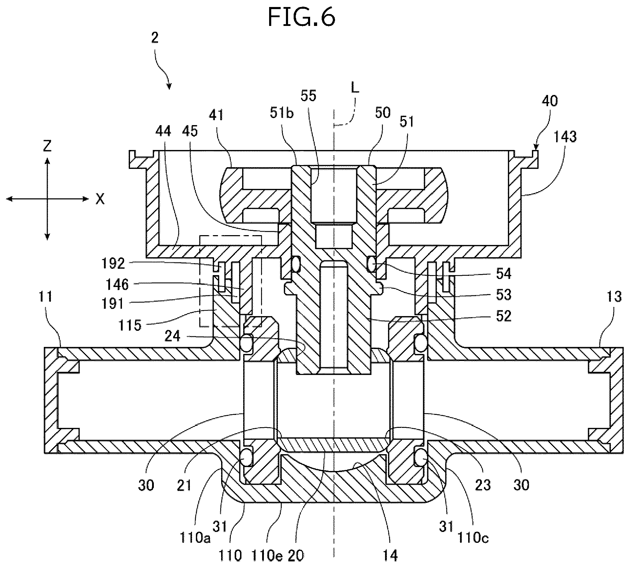

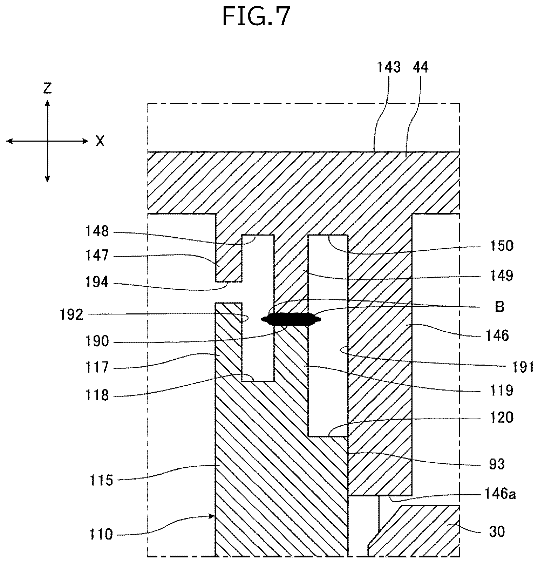

A flow path switching valve according to a second embodiment of the present invention will be described below with reference to Fig. 6 and Fig. 7. The main difference between the configuration of the flow path switching valve of the second embodiment and the configuration of the flow path switching valve of the first embodiment is that infrared welding is used to join a valve main body and a case.

Fig. 6 is a vertical cross-sectional view of the flow path switching valve according to the second embodiment of the present invention. Fig. 7 is an enlarged cross-sectional view that is surrounded by a chain line frame in the vertical cross-sectional view illustrated in Fig. 6. Fig. 6 illustrates a flow path switching valve 2 to which the upper case 42, the potentiometer shaft 60, the potentiometer base 70, and the potentiometer 80 have not yet been attached.

The flow path switching valve 2 of the present embodiment includes a valve main body 110 that has a configuration different from that of the valve main body 10 included in the flow path switching valve 1 of the first embodiment and a lower case 143 that has a configuration different from that of the lower case 43 included in the flow path switching valve 1 of the first embodiment. The flow path switching valve 2 has a configuration the same as that of the flow path switching valve 1 except with regard to the valve main body 110 and the lower case 143. In the flow path switching valve 2, components that are the same as those of the flow path switching valve 1 of the first embodiment will be denoted by the same reference signs, and descriptions thereof will be omitted.

For example, the valve main body 110 is made of synthetic resin such as polyphenylene sulfide (PPS) and is formed in the shape of a substantially cubic box having an open upper end. The valve main body 110 includes a surrounding wall portion 115 that is formed in a substantially quadrangular cylindrical shape and that has a left-side wall portion 110a, a front wall portion (not illustrated), a right-side wall portion 110c, and a rear wall portion (not illustrated), and a bottom wall portion 110e that is integrally provided at the lower end of the surrounding wall portion 115. As in the flow path switching valve 1 of the first embodiment, the first tubular portion 11, the second tubular portion 12, and the third tubular portion 13 are provided on the surrounding wall portion 115 of the valve main body 110.

The surrounding wall portion 115 includes, in order from outside to inside, a main-body outer projection 117, a main-body groove 118, a main-body inner projection 119, and a main-body cutout portion 120 in an upper end portion of the surrounding wall portion 115. The main-body outer projection 117, the main-body groove 118, the main-body inner projection 119, and the main-body cutout portion 120 are each formed in an annular shape and are arranged so as to be concentric with one another.

The lower case 143 includes a cylindrical portion 146 that is formed in a substantially quadrangular cylindrical shape and that projects downward from the bottom wall portion 44. The cylindrical portion 146 is inserted into the surrounding wall portion 115 of the valve main body 110 from the upper end side along the axis L direction (Z-axis direction). The cylindrical portion 146 is disposed inside the surrounding wall portion 115. An end 146a of the cylindrical portion 146 is fitted to the inside of the surrounding wall portion 115. As a result of the end 146a of the cylindrical portion 146 being fitted to the inside of the surrounding wall portion 115, the surrounding wall portion 115 and the cylindrical portion 146 are positioned with respect to each other. In addition, in the valve main body 110, the end 146a of the cylindrical portion 146 is disposed so as to be slightly spaced apart from the sheet members 30, 30 in the axis L direction. As a result, the cylindrical portion 146 also functions as a stopper that restrains the sheet members 30, 30 from being displaced in the axis L direction.

The lower case 143 includes, in order from outside to inside, a case outer projection 147, a case groove 148, a case inner projection 149, and a case inner groove 150 in the bottom wall portion 44 of the lower case 143. The case outer projection 147, the case groove 148, the case inner projection 149, and the case inner groove 150 are each formed in an annular shape and are arranged in such a manner as to surround the cylindrical portion 146 while being concentric with one another.

The cylindrical portion 146 of the lower case 143 is combined with the surrounding wall portion 115 of the valve main body 110. The main-body inner projection 119 and the case inner projection 149 are joined to each other by infrared welding. Since the lower case 143 is joined to the valve main body 110 by infrared welding, it is preferable that the lower case 143 be made of the same synthetic resin as that of the valve main body 110. In addition, the main-body outer projection 117 and the case outer projection 147 are arranged so as to face each other with a gap 194 in the axis L direction.

As illustrated in Fig. 7, the flow path switching valve 2 includes an annular joint portion 190 between the valve main body 110 and the lower case 143. Specifically, the joint portion 190 is a portion formed by joining the periphery of the main-body inner projection 119 and the periphery of the case inner projection 149 over the entire periphery by infrared welding. In addition, the flow path switching valve 2 has two annular burr containment spaces (a first burr containment space 191, a second burr containment space 192) each of which extends in the peripheral direction of the surrounding wall portion 115 between the valve main body 110 and the lower case 143. The first burr containment space 191 and the second burr containment space 192 are formed in such a manner that the joint portion 190 is interposed therebetween.

The first burr containment space 191 is positioned between the surrounding wall portion 115 and the cylindrical portion 146. The first burr containment space 191 is formed of the case inner groove 150 and a space. The space is demarcated by the main-body cutout portion 120 and the outer peripheral surface of the cylindrical portion 146. The first burr containment space 191 is an enclosed space. As a result of the first burr containment space 191 being formed as an enclosed space, when the burr B generated from the joint portion 190 extends in the first burr containment space 191, the burr B can be contained in the first burr containment space 191 because there is no gap through which the burr B can extend.

The second burr containment space 192 is formed of the main-body groove 118 and the case groove 148. The second burr containment space 192 communicates with the outside of the surrounding wall portion 115 through the gap 194 formed between the main-body outer projection 117 and the case outer projection 147. By measuring a dimension of the gap 194 in the Z-axis direction, the distance between the valve main body 110 and the lower case 143 that has been changed through the joining process can be determined, and thus, the joined condition of the valve main body 110 and the lower case 143 can be checked.

The gap 194 is positioned so to be offset with respect to the joint portion 190 in the axis L direction (Z-axis direction). With this configuration, even when the burr B extends from the joint portion 190 in a direction perpendicular to the axis L direction, the burr B will not project to the outside of the valve main body 110.

The flow path switching valve 2 of the present embodiment also has the functions and effects similar to or the same as those of the flow path switching valve 1 of the first embodiment described above.

In each of the above-described embodiments, although a configuration example has been described in which ultrasonic welding or infrared welding is used as a welding method, a welding method other than these may be used.

Although the embodiments of the present invention have been described above, the present invention is not limited to these embodiments. Addition and removal of components and design changes may be suitably made to the above-described embodiments by those skilled in the art, and other embodiments obtained by suitably combining features of the above-described embodiments as long as they remain within the scope of the appended claims.

### Reference Signs List

### (First Embodiment)

1 ··· flow path switching valve, 10 ··· valve main body, 10a ··· left-side wall portion, 10b ··· front wall portion, 10c ··· right-side wall portion, 10d ··· rear wall portion, 10e ··· bottom wall portion, 11 ··· first tubular portion, 12 ··· second tubular portion, 13 ··· third tubular portion, 11a, 12a, 13a ··· opening, 14 ··· valve chamber, 15 ··· surrounding wall portion, 15a ··· end of surrounding wall portion, 20 ··· ball valve member, 21 ··· first opening, 22 ··· second opening, 23 ··· third opening, 24 ··· valve-shaft insertion hole, 25 ··· switching flow path, 30 ··· sheet member, 30a ··· annular groove, 31 ··· sealing member, 40 ··· driving section, 41 ··· gear, 43 ··· lower case, 44 ··· bottom wall portion, 45 ··· bearing portion, 46 ··· cylindrical portion, 46a ··· end of cylindrical portion, 47 ··· annular groove, 50 ··· valve shaft, 51 ··· round columnar portion, 51a ··· flat-surface portion, 51b ··· end surface, 52 ··· prism portion, 53 ··· stopper portion, 54 ··· O-ring, 55 ··· attachment hole, 60 ··· potentiometer shaft, 61 ··· fitting shaft portion, 70 ··· potentiometer base, 71 ··· base main body portion, 72 ··· meter attachment portion, 78 ··· screw, 80 ··· potentiometer, 81 ··· rotor, 82 ··· meter body portion, 90 ··· joint portion, 91 ··· first burr containment space, 92 ··· second burr containment space, 92a ··· first end portion, 92b ··· second end portion, 93, 94 ··· gap, B ··· burr

### (Second Embodiment)

2 ··· flow path switching valve, 110 ··· valve main body, 110a ··· left-side wall portion, 110c ··· right-side wall portion, 110e ··· bottom wall portion, 115 ··· surrounding wall portion, 117 ··· main-body outer projection, 118 ··· main-body groove, 119 ··· main-body inner projection, 120 ··· main-body cutout portion, 143 ··· lower case, 146 ··· cylindrical portion, 146a ··· end, 147 ··· case outer projection, 148 ··· case groove, 149 ··· case inner projection, 150 ··· case inner groove, 190 ··· joint portion, 191 ··· first burr containment space, 192 ··· second burr containment space, 194 ··· gap

## Claims

1. A flow path switching valve (1;2) comprising:
a valve main body (10;110);
a valve member (20) in the valve main body (10;110); and
a case (43;143) that is joined to the valve main body (10;110) and that accommodates a driving mechanism for driving the valve member (20),
wherein an annular joint portion (90;190), an annular first burr containment space (91;191), and an annular second burr containment space (92;192) are formed between the valve main body (10;110) and the case, the joint portion (90;190) being interposed between the first burr containment space (91;191) and the second burr containment space (92;192).
wherein the valve main body (10;110) includes a surrounding wall portion (15;115),
wherein the case (43;143) includes a cylindrical portion (46;146) disposed inside the surrounding wall portion (15;115), and
wherein an end of the cylindrical portion (46a;146a) is fitted to the inside of the surrounding wall portion (15;115), and
wherein the first burr containment space (91;191) is an enclosed space positioned between the surrounding wall portion (15;115) and the cylindrical portion (46;146).

2. The flow path switching valve according to Claim 1,
wherein the second burr containment space (92;192) communicates with the outside through a gap (94;194) formed between the surrounding wall portion (15;115) and the case (43;143).

3. The flow path switching valve according to Claim 1 or 2,
wherein the joint portion (90;190) is a portion formed by joining the inner peripheral surface of the surrounding wall portion (15;115) and the outer peripheral surface of the cylindrical portion (46;146) over the entire periphery.

4. The flow path switching valve according to Claim 3,
wherein the first burr containment space (91;191) is positioned close to the end (46a;146a) of the cylindrical portion (46;146), and
wherein the second burr containment space (92;192) is positioned close to an end of the surrounding wall portion (15;115).

5. The flow path switching valve according to Claim 4,
wherein the second burr containment space (92) has a first end portion (92a) that is closer to the joint portion (90) and a second end portion (92b), which is opposite to the first end portion (92a), and
wherein the second end portion (92b) is formed of an annular groove (47) formed in the case (43).

6. The flow path switching valve according to Claim 5,
wherein the second burr containment space (92) is formed in such a manner that the second end portion (92b) extends outward further than the first end portion (92a) does.

## Patentansprüche

1. Strömungswegumschaltventil (1; 2), umfassend:
einen Ventilhauptkörper (10; 110);
ein Ventilelement (20) in dem Ventilhauptkörper (10; 110); und
ein Gehäuse (43; 143), das mit dem Ventilhauptkörper (10; 110) verbunden ist und das einen Antriebsmechanismus zum Antreiben des Ventilelements (20) aufnimmt,
wobei ein ringförmiger Verbindungsabschnitt (90; 190), ein ringförmiger erster Grateinschlussraum (91; 191) und ein ringförmiger zweiter Grateinschlussraum (92; 192) zwischen dem Ventilhauptkörper (10; 110) und dem Gehäuse ausgebildet sind, wobei der Verbindungsabschnitt (90; 190) zwischen dem ersten Grateinschlussraum (91; 191) und dem zweiten Grateinschlussraum (92; 192) angeordnet ist,
wobei der Ventilhauptkörper (10; 110) einen umgebenden Wandabschnitt (15; 115) aufweist,
wobei das Gehäuse (43; 143) einen zylindrischen Abschnitt (46; 146) aufweist, der innerhalb des umgebenden Wandabschnitts (15; 115) angeordnet ist, und
wobei ein Ende des zylindrischen Abschnitts (46a; 146a) an der Innenseite des umgebenden Wandabschnitts (15; 115) angebracht ist, und
wobei der erste Grateinschlussraum (91; 191) ein eingeschlossener Raum ist, der zwischen dem umgebenden Wandabschnitt (15; 115) und dem zylindrischen Abschnitt (46; 146) angeordnet ist.

2. Strömungswegumschaltventil nach Anspruch 1,
wobei der zweite Grateinschlussraum (92; 192) durch einen Spalt (94; 194), der zwischen dem umgebenden Wandabschnitt (15; 115) und dem Gehäuse (43; 143) ausgebildet ist, mit der Außenseite in Verbindung steht.

3. Strömungswegumschaltventil nach Anspruch 1 oder 2,
wobei der Verbindungsabschnitt (90; 190) ein Abschnitt ist, der durch Verbinden der Innenumfangsfläche des umgebenden Wandabschnitts (15; 115) und der Außenumfangsfläche des zylindrischen Abschnitts (46; 146) über den gesamten Umfang ausgebildet ist.

4. Strömungswegumschaltventil nach Anspruch 3,
wobei der erste Grateinschlussraum (91; 191) nahe dem Ende (46a; 146a) des zylindrischen Abschnitts (46; 146) angeordnet ist, und
wobei der zweite Grateinschlussraum (92; 192) nahe einem Ende des umgebenden Wandabschnitts (15; 115) angeordnet ist.

5. Strömungswegumschaltventil nach Anspruch 4,
wobei der zweite Grateinschlussraum (92) einen ersten Endabschnitt (92a), der näher an dem Verbindungsabschnitt (90) liegt, und einen zweiten Endabschnitt (92b), der dem ersten Endabschnitt (92a) gegenüberliegt, aufweist, und
wobei der zweite Endabschnitt (92b) aus einer ringförmigen Nut (47) ausgebildet ist, die in dem Gehäuse (43) ausgebildet ist.

6. Strömungswegumschaltventil nach Anspruch 5,
wobei der zweite Grateinschlussraum (92) derart ausgebildet ist, dass sich der zweite Endabschnitt (92b) weiter nach außen erstreckt als der erste Endabschnitt (92a).

## Revendications

1. Soupape de commutation de trajet d'écoulement (1 ; 2) comportant :
un corps principal de soupape (10 ; 110) ;
un élément de soupape (20) dans le corps principal de soupape (10 ; 110) ; et
un boîtier (43 ; 143) qui est assemblé au corps principal de soupape (10 ; 110) et qui reçoit un mécanisme d'entraînement pour entraîner l'élément de soupape (20),
dans laquelle une partie de liaison annulaire (90 ; 190), un premier espace annulaire de confinement de bavures (91 ; 191) et un second espace annulaire de confinement de bavures (92 ; 192) sont formés entre le corps principal de soupape (10 ; 110) et le boîtier, la partie de liaison (90 ; 190) étant intercalée entre le premier espace de confinement de bavures (91 ; 191) et le second espace de confinement de bavures (92 ; 192),
dans laquelle le corps principal de soupape (10 ; 110) inclut une partie de paroi d'entourage (15 ; 115),
dans laquelle le boîtier (43 ; 143) inclut une partie cylindrique (46 ; 146) disposée à l'intérieur de la partie de paroi d'entourage (15 ; 115), et
dans laquelle une extrémité (46a ; 146a) de la partie cylindrique (46 ; 146) est montée à l'intérieur de la partie de paroi d'entourage (15 ; 115), et
dans laquelle le premier espace de confinement de bavures (91 ; 191) est un espace clos positionné entre la partie de paroi d'entourage (15 ; 115) et la partie cylindrique (46 ; 146).

2. Soupape de commutation de trajet d'écoulement selon la revendication 1,
dans laquelle le second espace de confinement de bavures (92 ; 192) communique avec l'extérieur par l'intermédiaire d'un interstice (94 ; 194) formé entre la partie de paroi d'entourage (15 ; 115) et le boîtier (43 ; 143).

3. Soupape de commutation de trajet d'écoulement selon la revendication 1 ou 2,
dans laquelle la partie de liaison (90 ; 190) est une partie formée en assemblant la surface périphérique intérieure de la partie de paroi d'entourage (15 ; 115) et la surface périphérique extérieure de la partie cylindrique (46 ; 146) sur toute la périphérie.

4. Soupape de commutation de trajet d'écoulement selon la revendication 3,
dans laquelle le premier espace de confinement de bavures (91 ; 191) est positionné près de l'extrémité (46a ; 146a) de la partie cylindrique (46 ; 146), et
dans laquelle le second espace de confinement de bavures (92 ; 192) est positionné près d'une extrémité de la partie de paroi d'entourage (15 ; 115).

5. Soupape de commutation de trajet d'écoulement selon la revendication 4,
dans laquelle le second espace de confinement de bavures (92) a une première partie d'extrémité (92a) qui est plus près de la partie de liaison (90) et une seconde partie d'extrémité (92b), qui est opposée à la première partie d'extrémité (92a), et
dans laquelle la seconde partie d'extrémité (92b) est formée d'une rainure annulaire (47) formée dans le boîtier (43).

6. Soupape de commutation de trajet d'écoulement selon la revendication 5,
dans laquelle le second espace de confinement de bavures (92) est formé d'une telle manière que la seconde partie d'extrémité (92b) s'étend vers l'extérieur plus loin que la première partie d'extrémité (92a) ne s'étend.
